# EUROPÄISCHE PATENTANMELDUNG

(11) **EP 0 793 081 A1**
(43) Veröffentlichungstag der Anmeldung: **03.09.1997**
(21) Anmeldenummer: 97102487.2
(22) Anmeldetag: 15.02.1997
(51) Int. Cl.: G01F 11/26

(54) **Flüssigkeitsbehälter mit Dosiervorrichtung**

(30) Priorität: 27.02.1996 DE 29603551 U
(71) Anmelder: Friedrich Sanner GmbH & Co. KG Spritzgusswerk, D-64625 Bensheim 3-Auerbach (DE)
(72) Erfinder: Schuster, Herbert, 64683 Einhausen (DE)
(74) Vertreter: Helber, Friedrich G., Dipl.-Ing.

(57) **Zusammenfassung**

Flüssigkeits-Behälter (10) mit einem als Schraubkappe (12) ausgebildeten Behälter-Verschluß und im Behälter-Hals (16) angeordneter Dosiervorrichtung (18).

Im Hals (16) des Behälters (10) ist ein Steuerabschnitt (20) vorgesehen, in welchem längsverschieblich eine bodenseitig verschlossene, ausgußseitig jedoch offene Dosierhülse (24) angeordnet ist. Die Wandung der Dosierhülse wird von wenigstens einer Durchlaßöffnung (34) durchbrochen. In der durch die Schraubkappe ganz in den Behälterhals eingeschraubten Stellung stellt die Durchlaßöffnung (34) eine Verbindung zwischen dem Behälterinnern und dem Innern der Dosierhülse her, so daß eine vorbestimmte Menge von Flüssigkeit aus dem Behälterinnern in die Dosierhülse (24) übertreten kann, wenn der Behälter-Ausguß nach unten weist.

Zwischen der Schraubkappe (12) und der Dosierhülse (24) ist ein Stellmechanismus vorgesehen, welcher die Dosierhülse (34) beim Abschrauben der Schraubkappe (12) vom Behälter-Hals (16) in eine Stellung verschiebt, in welcher die Durchlaßöffnung (34) vom Steuerabschnitt (20) verschlossen wird. Bei abgeschraubter Schraubkappe kann dann nur die in der Dosierhülse befindliche abgemessene Flüssigkeitsmenge ausgegossen werden. Aus dem Behälterinnern kann dagegen keine Flüssigkeit in die Dosierhülse nachströmen.

## Beschreibung

Die Erfindung betrifft einen Flüssigkeits-Behälter mit einem als Schraubkappe ausgebildeten Behälter-Verschluß und Behälter-Hals angeordneter Dosiervorrichtung.

Das Erfordernis der Dosierung von aus einem Behälter abzugebenden Flüssigkeiten besteht vorwiegend in solchen Fällen, in denen die Entnahme und der Gebrauch einer nicht korrekten Flüssigkeitsmenge zu Schäden - beispielsweise bei Arzneimitteln zu Gesundheitsschäden - führen kann.

So sind insbesondere auf dem Arzneimittelsektor einzusetzende Flüssigkeits-Behälter mit Dosiereinrichtungen der unterschiedlichsten Ausgestaltung entwickelt worden, die von Tropfeinsätzen, bei denen eine bestimmte Anzahl von aus der Flasche austretenden Tropfen gezählt werden muß, bis zu solchen Dosiermitteln reichen, bei denen im Behälterausguß ein wahlweise zum Behälterinnern und zum eigentlichen Ausguß hin zu öffnender und zu verschließender Dosierraum gebildet wird. So ist beispielsweise ein in einer speziell ausgebildeten Verschlußkappe für den die Flüssigkeit aufnehmenden Behälter vorgesehene Dosiervorrichtung bekannt (DE- 42 08 260 A1) bekannt, bei welcher in der Verschlußkappe ein elastischer Schlauch vorgesehen ist, in dem durch abwechselndes Abklemmen des Schlauchquerschnitts mit voneinander beabstandeten Schiebern ein vom Innenraum des Behälters her zu befüllender bzw. durch den Ausguß zu entleerender Dosierraum gebildet wird. Diese funktionell an sich durchaus brauchbare Dosiervorrichtung ist relativ aufwendig in der Herstellung und auch nur für geringe Dosiermengen geeignet.

Der Erfindung liegt demgegenüber die Aufgabe zugrunde, einen Flüssigkeits-Behälter mit einer Dosiervorrichtung zu schaffen, die bei unkompliziertem Aufbau und einfacher Handhabung die genaue Dosierung auch größerer Flüssigkeitsmengen gestattet.

Diese Aufgabe wird erfindungsgemäß dadurch gelöst, daß im Hals des Behälters ein behälterinnenseitig und behälterausgußseitig offener, im wesentlichen zylindrischer Steuerabschnitt vorgesehen ist, daß im Steuerabschnitt längsverschieblich und abgedichtet eine behälterinnenseitig durch einen Boden verschlossene und behälterausgußseitig offene Dosierhülse vorgesehen ist, in deren Wandung wenigstens eine Durchlaßöffnung in solchem Abstand vom Boden angeordnet ist, daß der zwischen der Durchlaßöffnung bzw. den Durchlaßöffnungen und dem Boden gebildete Raum der Dosierhülse ein dem geforderten Flüssigkeits-Dosiervolumen entsprechendes Volumen aufweist, daß der Steuerabschnitt die Wandung der Dosierhülse bis in den Bereich der Durchlaßöffnung(en) umgibt, wobei die Länge des Steuerabschnitts so bemessen ist, daß die Durchlaßöffnung(en) in einer bei geschlossener Schraubkappe ins Behälterinnere verschobenen ersten Stellung der Dosierhülse zumindest zum Teil vor der behälterinnenseitigen Begrenzung des Steuerabschnitts steht bzw. stehen und so einen Durchlaß zwischen Behälterinnern und dem Dosierraum herstellt bzw. herstellen, in einer bei abgenommener Schraubkappe demgegenüber in Ausgußrichtung verschobenen zweiten Stellung dagegen durch den Steuerabschnitt überdeckt ist bzw. sind, und daß ein Stellmechanismus vorgesehen ist, welcher die Dosierhülse beim Abschrauben der Schraubkappe vom Behälter-Hals von der ersten in die zweite und beim Aufschrauben auf den Behälter-Hals von der zweiten in die erste Stellung verschiebt. Die Dosierung einer vorgegebenen Flüssigkeitsmenge erfolgt dabei so, daß der flüssigkeitsgefüllte Behälter, z.B. eine mit einem flüssigen Arzneimittel oder einem mit Wasser zu verdünnenden flüssigen Reinigungs- oder Desinfektionsmittelkonzentrat gefüllten Flasche mit aufgeschraubter Schraubkappe so gekippt wird, daß der Ausguß nach unten weist. Die im Behälter enthaltene Flüssigkeit tritt über die Durchlaßöffnung(en) in der Dosierhülse ins Innere der Dosierhülse ein. Durch zügiges Zurückschwenken des Behälters strömt nicht nur die im Halsbereich des Behälters befindliche Flüssigkeit in Richtung zum Behälterboden zurück, sondern von der in die Dosierhülse eingetretenen Flüssigkeit tritt über die Durchlaßöffnung(en) die das Dosiervolumen übersteigende Flüssigkeitsmenge ebenfalls in den Behälter zurück. Wenn nun die Schraubkappe vom Behälter-Hals abgeschraubt wird, wird die Dosierhülse über den Stellmechanismus so weit in den Steuerabschnitt verschoben, daß die Durchlaßöffnung in den Steuerabschnitt verschoben und somit das innere der Dosierhülse vom Behälterinnern abgeschlossen wird. Die in der Dosierhülse befindliche Menge der Flüssigkeit kann also in üblicher Weise durch Kippen des Behälters aus dem offenen Ende der Dosierhülse ausgeschüttet werden, ohne daß die Gefahr eines Austritts zusätzlicher Flüssigkeit aus dem Behälterinnern besteht.

In bevorzugter Weiterbildung der Erfindung ist das behälterausgußseitige Ende der Dosierhülse durch den Steuerabschnitt hindurch in den Bereich der geschlossenen Deckelfläche der Schraubkappe geführt und zwischen dem aus dem Steuerabschnitt vortretenden Endbereich der Dosierhülse und dem Steuerabschnitt eine Federanordnung vorgesehen, welche die Dosierhülse bei abgenommener Schraubkappe in die zweite Stellung drängt, durch Aufschrauben der Schraubkappe aber zumindest um das Maß des Verschiebungswegs der Dosierhülse von der ersten in die zweite Stellung in Verschiebungsrichtung elastisch verformbar ist. Der Stellmechanismus wird somit durch die Federanordnung in Verbindung mit der beim Verschrauben der Schraubkappe sich ändernden Lage der Schraubkappe gebildet.

Der Steuerabschnitt kann dabei in einer gesonderten, abgedichtet in den Behälter-Hals eingesetzte Steuerhülse ausgebildet sein

Alternativ kann der Steuerabschnitt auch von einem im wesentlichen zylindrischen Abschnitt der Innenfläche der Wandung des Behälter-Halses selbst gebildet werden, was dann möglich ist, wenn der Behälter beispielsweise eine im Spritzverfahren geblasene Flasche ist, da bei diesem Herstellungsverfahren der Steuerabschnitt im Halsinnern mit genügender Form- und Maßhaltigkeit herstellbar ist.

Die Dosierhülse ist zweckmäßig in ihrem ausgußseitigem Endbereich mit einem radial vortretenden Flansch versehen, und zwischen den einander zugewandten Flächen des Radial-Flanschs der Dosierhülse und der ausgußseitigen Begrenzung des Steuerabschnitts ist dann die in Verschiebungsrichtung der Dosierhülse elastisch verformbare Federanordnung vorgesehen.

Wenn der Steuerabschnitt in der oben angedeuteten Weise in einer gesonderten Steuerhülse gebildet ist, weist zweckmäßig auch die Steuerhülse an ihrem behälterausgußseitigen Ende einen auf der Stirnfläche des Behälter-Halses abgestützten radial vorspringenden Flansch auf, wobei dann die elastisch verformbare Federanordnung zwischen den einander zugewandten Flächen der Radial-Flansche der Steuerhülse und der Dosierhülse angeordnet ist.

Die Federanordnung wird in bevorzugter Ausgestaltung der Erfindung von einem um das geforderte Maß elastisch zusammendrückbaren Ring aus elastomerem Material gebildet. Dieser - Teil des Stellmechanismus bildende - Ring dient dann gleichzeitig zur Abdichtung des Schraubverschlusses des Behälters. Anstelle eines elastischen Rings können hier aber auch anders ausgestaltete Federn, beispielsweise integral an einem der Radial-Flansche angesetzte und sich elastisch am gegenüberliegenden Radial-Flansch abstützende federnd verbiegbare Arme etc. vorgesehen sein.

Der Stellmechanismus kann alternativ auch dadurch gebildet sein, daß das behälterausgußseitige Ende der Dosierhülse durch die Steuerhülse hindurch in den Bereich der geschlossenen Deckelfläche der Schraubkappe geführt ist und zwischen der Dosierhülse und der Schraubkappe Mittel zur kraft- und/oder formschlüssigen lösbaren Verbindung des Dosierhülsen-Endes und der Schraubkappe vorgesehen sind, wobei dann an der Dosierhülse und der Steuerhülse zweckmäßig jeweils wenigstens ein Anschlag bzw. Gegenanschlag vorgesehen sind, welche in der zweiten Stellung aneinander zur Anlage kommen und eine Mitnahme der Dosierhülse im Sinne einer Verschiebung in Ausziehrichtung über die zweite Stellung hinaus verhindern. Die lösbare Verbindung des Dosierhülsen-Endes und der Schraubkappe kann beispielsweise von einer in Verschiebungsrichtung wirkenden Rastverbindung gebildet werden.

Aus Gründen der Abdichtung kann es zweckmäßig sein, wenn von der geschlossenen Deckelfläche der Schraubkappe ein im Querschnitt dem lichten Innenquerschnitt des ausgußseitigen Endes der Dosierhülse im wesentlichen komplementär entsprechender Ringvorspring stopfenartig in die Dosierhülse eingreift. Die lösbare, form- und/oder kraftschlüssige Verbindung kann dann zwischen dem Ringvorsprung der Schraubkappen-Deckelfläche und dem ausgußseitigen Endbereich der Dosierhülse ausgebildet, wobei eine kraftschlüssige Verbindung im einfachsten Fall dadurch hergestellt wird, daß der Außendurchmesser des Ringvorsprungs mit geringfügigem Übermaß gegenüber dem lichten Innendurchmesser der Dosierhülse bemessen ist. Zusätzlich kann der Ringvorsprung in der Dosierhülse verrastet werden, indem einzelne Rastansätze oder ein umlaufender Rastvorsprung einer zugeordneten, ringförmig umlaufenden Nut gegenübergestellt wird, wobei die Ausrichtung so getroffen ist, daß Rastvorsprung und Nut in der ersten Stellung zueinander ausgerichtet sind und formschlüssig ineinander einrasten.

Die Erfindung ist in der folgenden Beschreibung zweier Ausführungsbeispiele in Verbindung mit der Zeichnung näher erläutert, die in den einzelnen Zeichnungsfiguren jeweils den im Halsbereich entlang einer Längsmittelebene geschnitten dargestellten erfindungsgemäßen Flüssigkeits-Behälter in unterschiedlichen Stellungen während des Dosier- und Entnahmevorgangs zeigt, wobei
- Fig. 1: den Behälter des ersten Ausführungsbeispiels in der normalen Aufbewahrungsstellung mit verschlossener Schraubkappe,
- Fig. 2: den Behälter in der zum Zweck der Befüllung der Dosierhülse mit zu dosierender Flüssigkeit gekippter Stellung mit nach unten weisendem Ausguß,
- Fig. 3: den in die Normalstellung zurückgekippten Behälter mit nunmehr in die Dosierhülse übergetretender abgemessener Flüssigkeitsmenge,
- Fig. 4: den Behälter nach dem Abschrauben der Schraubkappe, und
- Fig. 5: den Behälter beim Ausgießen der abgemessenen Flüssigkeitsmenge aus der Dosierhülse zeigt, während in
- Fig. 6: der Behälter des zweiten Ausführungsbeipiels in einer der in Fig. 1 entsprechenden Darstellung jedoch mit bereits teilweise in Öffnungsrichtung hochgeschraubter Schraubkappe veranschaulicht ist.

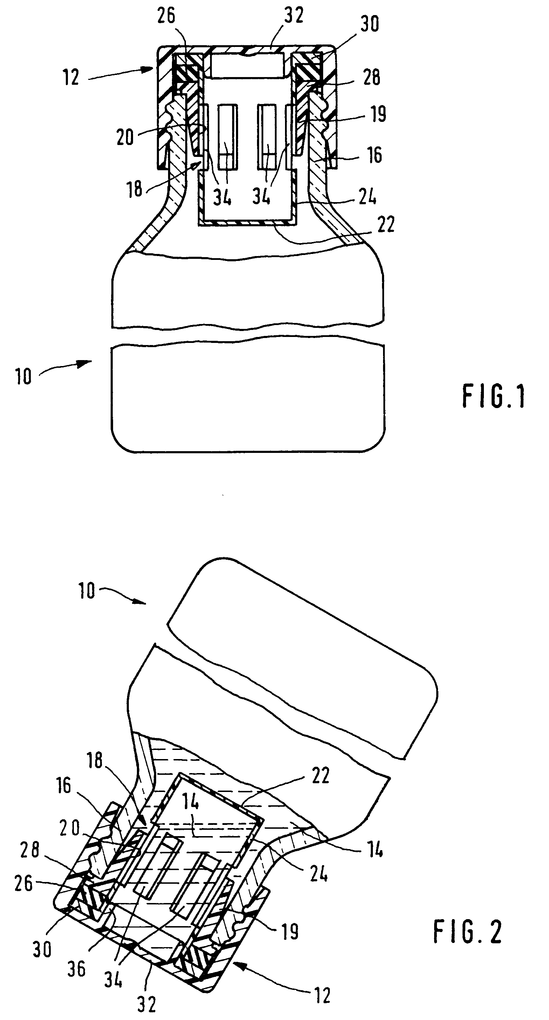

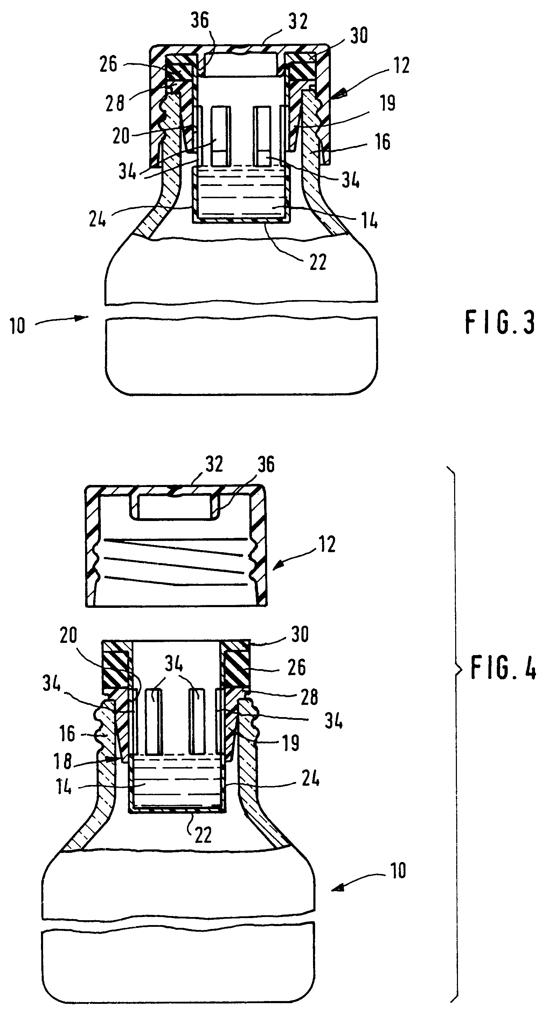

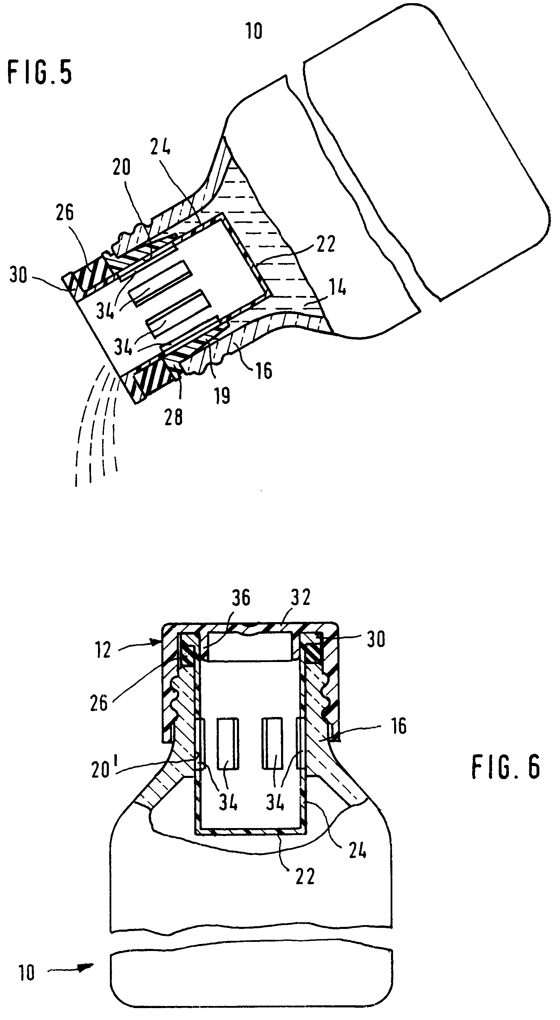

Der in den Figuren 1 bis 5 dargestellte erfindungsgemäße Flüssigkeits-Behälter ist als gläserne Flasche 10 mit einer Schraubkappe 12 dargestellt, in welcher eine dosiert abzugebende Flüssigkeit 14 abgefüllt ist. Im Hals 16 der Flasche 10 ist die Dosiervorrichtung 18 angeordnet, welche von einer abgedichtet in den Behälter-Hals 16 eingesetzten beidseitig offenen Steuerhülse 19 mit einem von deren im wesentlichen zylindrischer Innenfläche gebildeten Steuerabschnitt 20, einer in der Steuerhülse 19 längsverschieblich angeordneten, am behälterinneren Ende durch einen Boden 22 verschlossenen und am gegenüberliegenden ausgußseitigen Ende offenen Dosierhülse 24 und - im speziellen Fall - noch von einem Ring 26 aus elastomerem Material, z.B. einem Gummiring, gebildet wird, der in entspanntem Zustand (Fig. 4 und 5) eine relativ große Höhe hat, sich in durch die aufgeschraubte Schraubkappe verschlossenem Zustand der Flasche 10 (Fig. 1 bis 3) aber deutlich elastisch zusammendrücken läßt.

Die Steuerhülse 19 weist an ihrem ausgußseitigen oberen Ende einen auf der Stirnfläche des Behälter-Halses 16 abgestützten, radial vorspringenden Flansch 28 auf, auf dessen freier Stirnfläche der elastomere Ring 26 aufsitzt. Auch die Dosierhülse 24 ist mit einem derartigen radial vortretenden Flansch 30 versehen, an deren zum Behälter gewandter Unterseite die gegenüberliegende Stirnseite des elastischen Rings 26 anliegt. D.h. der Ring 26 ist zwischen den Radial-Flanschen 28 und 30 angeordnet. Beim Aufschrauben der Schraubkappe 12 trifft deren innere Deckelfläche 32 auf den Radial-Flansch 30 der Dosierhülse 24, wodurch der Ring 26 elastisch zusammengedrückt wird. Die Dosierhülse 24 verschiebt sich dabei gleichzeitig um das Maß der Zusammendrückung des Rings ins Innere des Behälters.

Beim Abschrauben der Schraubkappe 12 entspannt sich der Ring 26 wieder und drängt den Flansch 30 und somit die Dosierhülse 24 wieder in die in Figur 4 gezeigte Stellung. Die bei geschlossenem Behälter von der Schiebehülse eingenommene, in Richtung ins Behälterinnere verschobene Stellung wird nachfolgend als erste Stellung bezeichnet, während die bei geöffnetem Behälter eingenommene Stellung als zweite Stellung bezeichnet wird.

In der Wandung der Dosierhülse 24 sind in gleichmäßigem Abstand verteilt eine Anzahl von fensterartigen langgestreckten Durchlaßöffnungen 34 mit einigem Abstand vom Boden 22 vorgesehen. Zwischen den Durchlaßöffnungen 34 und dem Boden wird also ein Raum gebildet, dessen Volumen entsprechend dem gewünschten Dosiervolumen gewählt wird.

Wie in den Figuren 1 bis 3 erkennbar ist, ist die Dosierhülse 24 in der ersten Stellung soweit in den Behälter eingeschoben, daß die Durchlaßöffnungen 34 zum Teil noch vor der unteren Stirnfläche der Steuerhülse 19 stehen, so daß das Innere der Dosierhülse also mit dem Inneren des Behälters über die Durchlässe 34 verbunden ist. Wenn somit das Fläschchen 10 in der in Figur 2 veranschaulichten Weise so gekippt wird, daß der Behälterhals nach unten weist, kann Flüssigkeit 14 ins Innere der Dosierhülse 24 übertreten, wie dies in der erwähnten Figur 2 auch veranschaulicht ist.

Wird die Flasche 10 dann wieder in die Normallage zurückgekippt, verbleibt innerhalb der Dosierhülse genau die abgemessene Flüssigkeitsmenge, wie dies in Figur 3 veranschaulicht ist. Zuviel in die Dosierhülse 24 übergetretene Flüssigkeit 14 strömt über die noch geöffneten Durchlässe 34 in den Behälter zurück.

Wenn nun die Schraubkappe in der in Figur 4 gezeigten Weise abgeschraubt wird, entspannt sich der elastische Ring 26 und drängt die Dosierhülse in die zweite Stellung, in welcher die Durchlässe 34 vollständig in den Steuerabschnitt 20 der Steuerhülse 19 zurückgezogen sind. Zwischen dem Innern der Dosierhülse und dem Innern des Fläschchens 10 besteht dann keine Verbindung mehr. Das Fläschchen kann dann in der in Figur 5 gezeigten Weise gekippt werden und die abgemessene Flüssigkeitsmenge ausgeschüttet werden. Da die Durchlässe 34 durch den Steuerabschnitt 20 verschlossen sind, kann dabei keine Flüssigkeit aus dem Innern der Flasche 10 zusätzlich austreten.

In Fig. 6 ist ein gegenüber dem beschriebenen Behälter 10 abgewandeltes zweites Ausführungsbeispiel dargestellt, welches sich vom vorstehend beschriebenen ersten Ausführungsbeispiel nur dadurch unterscheidet, daß der Steuerabschnitt 20' direkt von der im wesentlichen zylindrisch geformten Innenfläche der Wandung des Halses 16 des Behälters 10 gebildet wird, so daß also die Steuerhülse 19 des ersten Ausführungsbeispiels entfallen kann. Die Ausbildung des Steuerabschnitts 20' direkt im Hals 16 des Behälters ist beispielsweise dann möglich, wenn der Behälter 10 von einer spritzgeblasenen Flasche gebildet wird.

Es ist ersichtlich, daß im Rahmen des Erfindungsgedankens Abwandlungen und Weiterbildungen der beschriebenen Dosiervorrichtung 18 verwirklichbar sind. So kann beispielsweise anstelle des gleichzeitig als Dichtring wirkenden Rings 26 aus elastomerem Material auch eine andere Federanordnung vorgesehen sein, welche die Dosierhülse 24 beim Abschrauben der Schraubkappe 12 von der ersten in die zweite Stellung verschiebt. Anstelle einer Federanordnung kann auch eine lösbare Verbindung zwischen der Schraubkappe und der Dosierhülse vorgesehen sein, welche die Dosierhülse beim Abschrauben der Schraubkappe zwangsläufig von der ersten in die zweite Stellung mitnimmt, wobei dann lediglich dafür gesorgt sein muß, daß sich die Schraubkappe nach Erreichen der zweiten Stellung von der Dosierhülse 24 trennt. Durch in der zweiten Endstellung aneinander zur Anlage kommende entsprechende Anschläge an der Steuerhülse 20 und der Dosierhülse 24 kann dies sichergestellt werden. Die Mitnahmeverbindung zwischen der Schraubkappe 12 und der Dosierhülse 24 kann dabei als formschlüssige Rastverbindung zwischen dem von der inneren Schraubkappen-Deckelfläche 32 vortretenden stopfenartigen Ringvorsprung 36 und der Dosierhülse 24 gebildet werden. Alternativ kann auch eine kraftschlüssige Verbindung zwischen dem Ringvorsprung 36 und der Dosierhülse vorgesehen sein, die einfach dadurch verwirklichbar ist, daß der Außendurchmesser des Ringvorsprungs 36 gegenüber dem lichten Innendurchmesser der Dosierhülse 24 mit einem gewissen Übermaß bemessen wird.

## Patentansprüche

1. Flüssigkeits-Behälter mit einem als Schraubkappe (12) ausgebildeten Behälter-Verschluß und im Behälter-Hals (16) angeordneter Dosiervorrichtung (18),
**dadurch gekennzeichnet,**
daß im Hals (16) des Behälters (10) ein behälterinnenseitig und behälterausgußseitig offener, im wesentlichen zylindrischer Steuerabschnitt (20; 20') vorgesehen ist,
daß im Steuerabschnitt (20; 20') längsverschieblich und abgedichtet eine behälterinnenseitig durch einen Boden (22) verschlossene und behälterausgußseitig offene Dosierhülse (24) vorgesehen ist, in deren Wandung wenigstens eine Durchlaßöffnung (34) in solchem Abstand vom Boden (22) angeordnet ist, daß der zwischen der Durchlaßöffnung (34) bzw. den Durchlaßöffnungen (34) und dem Boden (22) gebildete Raum der Dosierhülse (24) ein dem geforderten Flüssigkeits-Dosiervolumen entsprechendes Volumen aufweist,
daß der Steuerabschnitt (20; 20') die Wandung der Dosierhülse (24) bis in den Bereich der Durchlaßöffnung(en) (34) umgibt, wobei die Länge des Steuerabschnitts (20; 20') so bemessen ist, daß die Durchlaßöffnung(en) in einer bei geschlossener Schraubkappe (12) ins Behälterinnere verschobenen ersten Stellung der Dosierhülse (24) zumindest zum Teil vor der behälterinnenseitigen Begrenzung des Steuerabschnitts (20; 20') steht bzw. stehen und so einen Durchlaß zwischen Behälterinnern und Dosierraum herstellt bzw. herstellen, in einer bei abgenommener Schraubenkappe (12) demgegenüber in Ausgußrichtung verschobenen zweiten Stellung dagegen durch den Steuerabschnitt (20; 20') überdeckt ist bzw. sind, und
daß ein Stellmechanismus vorgesehen ist, welcher die Dosierhülse (24) beim Abschrauben der Schraubkappe (12) vom Behälter-Hals (16) von der ersten in die zweite und beim Aufschrauben auf den Behälter-Hals (16) von der zweiten in die erste Stellung verschiebt.

2. Flüssigkeits-Behälter nach Anspruch 1, dadurch gekennzeichnet, daß das behälterausgußseitige Ende der Dosierhülse (24) durch den Steuerabschnitt (20; 20') hindurch in den Bereich der geschlossenen Deckelfläche (32) der Schraubkappe (12) geführt ist und zwischen dem aus dem Steuerabschnitt (20; 20') vortretenden Endbereich der Dosierhülse (24) und dem Behälter-Hals (16) eine Federanordnung vorgesehen ist, welche die Dosierhülse (24) bei abgenommener Schraubkappe (12) in die zweite Stellung drängt, durch Aufschrauben der Schraubkappe (12) aber zumindest um das Maß des Verschiebungswegs der Dosierhülse (24) von der ersten in die zweite Stellung in Verschiebungsrichtung elastisch verformbar ist.

3. Flüssigkeits-Behälter nach Anspruch 1 oder 2, dadurch gekennzeichnet, daß der Steuerabschnitt (20) in einer gesonderten, abgedichtet in den Behälter-Hals (16) eingesetzten Steuerhülse (19) ausgebildet ist.

4. Flüssigkeits-Behälter nach Anspruch 1 oder 2, dadurch gekennzeichnet, daß der Steuerabschnitt (20') von einem im wesentlichen zylindrischen Abschnitt der Innenfläche der Wandung des Behälter-Halses (16) selbst gebildet wird.

5. Flüssigkeits-Behälter nach einem der Ansprüche 1 bis 4, dadurch gekennzeichnet, daß die Dosierhülse (24) in ihrem ausgußseitigen Endbereich einen radial vortretenden Flansch (30) aufweist, und daß zwischen den einander zugewandten Flächen des Radial-Flanschs (30) der Dosierhülse (24) und der ausgußseitigen Begrenzung des Steuerabschnitts (20; 20') die in Verschiebungsrichtung der Dosierhülse (24) elastisch verformbare Federanordnung vorgesehen ist.

6. Flüssigkeits-Behälter nach Anspruch 3 und 5, dadurch gekennzeichnet, auch die Steuerhülse (19) an ihrem behälterausgußseitigen Ende einen auf der Stirnfläche des Behälter-Halses (16) abgestützten radial vorspringenden Flansch (28) aufweist, und daß die elastisch verformbare Federanordnung zwischen den einander zugewandten Flächen der Radial-Flansche (28; 30) der Steuerhülse (19) und der Dosierhülse (24) angeordnet ist.

7. Flüssigkeits-Behälter nach Anspruch 5 oder 6, dadurch gekennzeichnet, daß die Federanordnung von einem um das geforderte Maß elastisch zusammendrückbaren Ring (26) aus elastomerem Material gebildet wird.

8. Flüssigkeits-Behälter nach einem der Ansprüche 1 bis 7, dadurch gekennzeichnet, daß das behälterausgußseitige Ende der Dosierhülse (24) durch den Steuerabschnitt (20) hindurch in den Bereich der geschlossenen Deckelfläche (32) der Schraubkappe (12) geführt ist und zwischen der Dosierhülse (24) und der Schraubkappe (12) Mittel zur kraft- und/oder formschlüssigen lösbaren Verbindung des Dosierhülsen-Endes und der Schraubkappe (12) vorgesehen sind

9. Flüssigkeits-Behälter nach Anspruch 8, dadurch gekennzeichnet, daß an der Dosier-Hülse (24) und der Steuerhülse (19) jeweils wenigstens ein Anschlag bzw. Gegenanschlag vorgesehen ist, welche in der zweiten Stellung aneinander zur Anlage kommen und eine Mitnahme der Dosierhülse (24) im Sinne einer Verschiebung in Ausziehrichtung über die zweite Stellung hinaus verhindern.

10. Flüssigkeits-Behälter nach einem der Ansprüche 1 bis 9, dadurch gekennzeichnet, daß von der geschlossenen Deckelfläche (32) der Schraubkappe (12) ein im Querschnitt dem lichten Innenquerschnitt des ausgußseitigen Endes der Dosierhülse (24) im wesentlichen komplementär entsprechender Ringvorsprung (36) stopfenartig in die Dosierhülse (24) eingreift.

11. Flüssigkeits-Behälter nach Anspruch 9 und 10, dadurch gekennzeichnet, daß die lösbare, form- und/oder kraftschlüssige Verbindung zwischen dem Ringvorsprung (36) der Schraubkappen-Deckelfläche (32) und dem ausgußseitigen Endbereich der Dosierhülse (24) ausgebildet ist.
